(19) Europäisches Patentamt / European Patent Office / Office européen des brevets

(11) **EP 3 447 559 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(51) Int Cl.:
**G02B 21/00** *(2006.01)* **G02B 27/58** *(2006.01)*

(21) Anmeldenummer: **18189298.5**

(22) Anmeldetag: **16.08.2018**

(54) **HOCHAUFLÖSENDE 2D-MIKROSKOPIE MIT VERBESSERTER SCHNITTDICKE**

HIGH RESOLUTION 2D MICROSCOPY WITH IMPROVED CUT THICKNESS

MICROSCOPIE 2D HAUTE RÉSOLUTION À ÉPAISSEUR DE COUPE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2017 DE 102017119531**

(43) Veröffentlichungstag der Anmeldung:
**27.02.2019 Patentblatt 2019/09**

(73) Patentinhaber: **Carl Zeiss Microscopy GmbH 07745 Jena (DE)**

(72) Erfinder:
• **Kleppe, Ingo**
  **07749 Jena (DE)**
• **Novikau, Yauheni**
  **07743 Jena (DE)**

(74) Vertreter: **Patentanwälte Geyer, Fehners & Partner mbB**
  **Perhamerstrasse 31**
  **80687 München (DE)**

(56) Entgegenhaltungen:
**EP-A1- 2 317 362    EP-A2- 2 860 566**
**US-A- 6 166 853**

• **HUFF ET AL: "The Airyscan Detector from Zeiss. In: Carl Zeiss Microscopy GmbH.", TECHNOLOGY NOTE, 1. Juli 2015 (2015-07-01), Seiten 1-18, XP055525432, United States**
• **P. SARDER ET AL: "Deconvolution methods for 3-D fluorescence microscopy images", IEEE SIGNAL PROCESSING MAGAZINE, Bd. 23, Nr. 3, 1. Mai 2006 (2006-05-01), Seiten 32-45, XP055004885, ISSN: 1053-5888, DOI: 10.1109/MSP.2006.1628876**

**Beschreibung**

Die Erfindung bezieht sich auf ein Verfahren zur hochauflösenden 2D-Scanning-Mikroskopie einer Probe, wobei die Probe mit Beleuchtungsstrahlung derart beleuchtet wird, dass die Beleuchtungsstrahlung an einem Punkt in oder auf der Probe zu einem beugungsbegrenzten Beleuchtungsfleck gebündelt wird, wobei eine Beleuchtungs-Punktbildverwaschungsfunktion symmetrisch zur optische Achse ist, der Punkt beugungsbegrenzt in ein Beugungsbild auf einen ortsauflösenden Flächendetektor abgebildet wird, wobei eine Abbildungs-Punktbildverwaschungsfunktion symmetrisch zur optische Achse ist und der Flächendetektor eine Ortsauflösung aufweist, die eine Beugungsstruktur des Beugungsbildes auflöst, der Punkt relativ zur Probe in verschiedene Scanpositionen mit einer Schrittweite verschoben wird, die kleiner ist als der halbe Durchmesser des Beleuchtungsflecks, wobei mehrere Scanpositionen bei einer festen z-Lage einer Fokalebene der Abbildung abgefahren werden, der Flächendetektor ausgelesen und aus den Daten des Flächendetektors und aus den diesen Daten zugeordneten Scanpositionen ein 2D-Bild der Probe erzeugt wird, das eine Auflösung aufweist, die über eine Auflösungsgrenze der Abbildung gesteigert ist.

Die Erfindung bezieht sich weiter auf ein Mikroskop zur hochauflösenden 2D-Scanning-Mikroskopie einer Probe, das aufweist einen Beleuchtungsstrahlengang zur Beleuchtung der Probe mit Beleuchtungsstrahlung, wobei die Beleuchtungsstrahlung an einem Punkt in oder auf der Probe zu einem beugungsbegrenzten Beleuchtungsfleck gebündelt ist und eine Beleuchtungs-Punktbildverwaschungsfunktion symmetrisch zur optische Achse ist, einen Abbildungsstrahlengang zur beugungsbegrenzen Abbildung des Punkts in ein Beugungsbild auf einen ortsauflösenden Flächendetektor, wobei eine Abbildungs-Punktbildverwaschungsfunktion symmetrisch zur optische Achse ist und der Flächendetektor eine Ortsauflösung aufweist, die eine Beugungsstruktur des Beugungsbildes auflöst, eine Scaneinrichtung zum Verschieben des Punkts relativ zur Probe in verschiedene Scanpositionen mit einer Schrittweite, die kleiner ist als der halbe Durchmesser des Beleuchtungsflecks, wobei die Scaneinrichtung mehrere Scanpositionen bei einer festen z-Lage einer Fokalebene der Abbildung abfährt, eine Auswerteeinrichtung zum Erzeugen eines 2D-Bildes der Probe aus den Daten des Flächendetektors und aus den diesen Daten zugeordneten Scanpositionen, das eine Auflösung aufweist, die über eine Auflösungsgrenze des Abbildungsstrahlengangs gesteigert ist.

Ein klassisches Anwendungsgebiet der Lichtmikroskopie ist die Laser-Scanning-Mikroskope (auch LSM abgekürzt), die mittels einer konfokalen Detektionsanordnung nur diejenige Ebene der Probe abbildet, die sich in der Fokusebene des Objektives befindet. Es wird ein optischer Schnitt gewonnen, dessen Dicke von der Größe der konfokalen Blende abhängt. Die Aufzeichnung mehrerer optischer Schnitte in verschiedenen Tiefen der Probe erlaubt es, ein dreidimensionales Bild der Probe zu generieren, das dann aus den verschiedenen optischen Schnitten zusammengesetzt ist. Die Laser-Scanning-Mikroskopie ist somit zur Untersuchung von dicken Präparaten geeignet.

Prinzipiell ist die optische Auflösung eines Lichtmikroskops, auch die eines LSM, durch die physikalischen Gesetze beugungsbegrenzt. Der Begriff "hochauflösend" wird hier für Auflösungen jenseits der Beugungsgrenze verwendet. Das Überwinden der Beugungsgrenze gelingt der sogenannten Airy-Scan-Mikroskopie, die z. B. in EP 2317362 A1 beschrieben ist. Diese kombiniert in der dort in Fig. 5 dargestellten und beschriebenen Ausführungsform eine beugungsbegrenzte Beleuchtung der Probe mit einem Flächendetektor, wobei eine Scaneinrichtung so ausgebildet ist, dass das Beugungsbild des mit dem Beleuchtungsfleck beleuchteten Punktes auf dem Flächendetektor ruht. Man bezeichnet diese Anordnung als sogenannte "de-scanned" Detektoranordnung. Sie wird üblicherweise dadurch erreicht, dass ein Scanner zwischen der Probe und dem Vereinigungspunkt von Beleuchtungseinrichtung und Abbildungseinrichtung angeordnet ist, der den Strahlengang ablenkt. Ein solcher Scanner wirkt sowohl auf den Beleuchtungsfleck als auch auf die Abbildung des mit dem Beleuchtungsfleck beleuchteten Punktes, so dass in Abbildungsrichtung nach dem Scanner der Strahlengang ruht. Eine Alternative zu einem solchen Scanner ist die Verwendung eines bewegbaren Probentischs, der die Probe verschiebt. Auch dann ruht das Beugungsbild auf dem Flächendetektor. Im Konzept der EP 2317362 A1 ist der Flächendetektor mit einer Ortsauflösung versehen, die bezogen auf den Abbildungsmaßstab eine Überabtastung des Beugungsbildes bewirkt und es somit erlaubt, die Struktur des Beugungsbildes aufzulösen.

In der klassischen konfokalen Mikroskopie ist die Tiefenauflösung untrennbar mit der Größe der konfokalen Lochblende verknüpft. Diese Blende filtert außerfokales Licht heraus und lässt den optischen Schnitt entstehen. Damit steigt auf dem Weg zu immer dünneren optischen Schnitten der Lichtverlust, da die Blende signifikant Licht blockt. Die Verwendung einer sehr kleinen konfokalen Blende führt zwar zu einem sehr dünnen optischen Schnitt, jedoch mit sehr schlechtem Signal/Rausch-Verhältnis.

Diese Problematik stellt sich auch bei der Airy-Scan-Mikroskopie, die die aus dem klassischen Verfahren (vgl. US 3013467 A) verwendete Lochblende durch einen 2D-Sensor ersetzt, bzw. die Blendenebene auf einen solchen Detektor abbildet. Mit diesem Ansatz beschäftigen sich auch die US 8705172, DE 102010049627 A1, US 2011/0267688 sowie die Veröffentlichungen C. Mueller et al., Phys. Rev. Lett., 104, 198101, 2010, A. York et al., "Resolution doubling in live, multi-cellular organisms via multifocal Structured Illumination Microscopy", Nature Methods, Vol. 9, 2012, G. De Luca et al., "Re-scan confocal microscopy: scanning twice for better resolution", Biomedical Optics Express, 4 (11), S. 2644-2656, S. Roth, "Optical photon reassignment microscopy (OPRA)", arXiv: 1306.6230, A. York et al., Nat. Methods 9, 749, 2012, I. Gregor et al., Proc. SPIE 10071, "Single Molecule Spectroscopy and Superresolution Imaging X", 100710C, 24. April 2017, doi: 10.1117/12.2255891, A. Jesacher et al., "Three-dimensional information from two-dimensional scans: a scanning microscope with postacquisition refocusing capability", Optica 2, S. 210-213, 2015. Letztere Veröffentlichung verwendet eine Phasenmaske zur z-Kodierung der Tiefeninformation.

Bei der Airy-Scan-Mikroskopie ist eine 3D-Bildaufnahme bekannt, in der sogenannte Bildstapel aufgenommen werden, d. h. mehrere 2D-Bilder in unterschiedlichen Fokalebenen erfasst werden. Diese Bildstapel können dann in einer 3D-Entfaltung für ein tiefenaufgelöstes Bild herangezogen werden. Einen Bildstapel kann man sich sparen, wenn durch eine gezielte Modifikation der Punktbildverwaschungsfunktion die an und für sich gegebene Uneindeutigkeit aufgehoben ist, die darin besteht, dass man a priori nicht weiß, ob ein defokussierter Punkt oberhalb oder unterhalb der Fokalebene liegt. Durch z-modulierte Punktbildverwaschungsfunktionen ist diese Uneindeutigkeit behoben und es lässt sich in einer 3D-Rekonstruktion aus einem einzigen 2D-Bild ein dreidimensionales Bild rekonstruieren.

Dreidimensionalen Bilder erlauben es grundsätzlich, die eingangs geschilderte Problematik der Kopplung zwischen konfokaler Blendengröße und optischer Schnittdicke zu einem gewissen Grade zu beheben. Dazu wird zuerst ein dreidimensionales Bild erzeugt und dann aus dem dreidimensionalen Bild die gewünschte Schnittebene selektiert. Nachteilig ist hierbei, dass ein dreidimensionaler Bildstapel abgearbeitet werden muss oder eine modifizierte Punktbildverwaschungsfunktion verwendet werden muss. Der Erfindung liegt deshalb die Aufgabe zugrunde, die optische Schnittdicke bei der 2D-Airy-Scan-Mikroskopie ohne diese beiden Anforderungen zu verbessern.

Die Erfindung ist in den Ansprüchen 1 und 5 definiert.

Die Erfindung sieht ein Verfahren zur hochaufgelösten Scan-Mikroskopie einer Probe gemäß dem Airy-Scan-Prinzip vor. Die Probe wird mit Beleuchtungsstrahlung beleuchtet. Dabei wird die Beleuchtungsstrahlung an einem Punkt in oder auf der Probe zu einem beugungsbegrenzten Beleuchtungsfleck gebündelt. Dieser Punkt wird beugungsbegrenzt in ein Beugungsbild auf einen Flächendetektor abgebildet. Der Flächendetektor weist Pixel auf und dadurch eine Ortsauflösung, die eine Beugungsstruktur des Beugungsbildes auflöst. Der Punkt wird relativ zur Probe in verschiedene Scanpositionen verschoben. Eine Schrittweite zwischen aufeinanderfolgenden Scanpositionen ist dabei kleiner als der Durchmesser des Beleuchtungsflecks, wodurch jeder Punkt der Probe mehrmals in verschieden liegenden Beleuchtungsflecken und Beugungsbilder enthalten ist. Der Flächendetektor wird ausgelesen. Aus den dabei gewonnen Daten und den diesen Daten zugeordneten Scanpositionen wird ein Bild der Probe erzeugt. Das Bild weist nach dem Airy-Scan-Prinzip eine Auflösung auf, die über eine Auflösungsgrenze der Abbildung hinaus gesteigert ist. Die Beugungsgrenze ist damit überwunden. Es wird ein reiner 2D-Scan durchgeführt.

Zur Verbesserung der Tiefenauflösung wird aus den Daten des Flächendetektors nicht unmittelbar das 2D-Bild erzeugt, da dann wieder die herkömmliche Verknüpfung zwischen Größe des Beugungsbildes (welche dem Durchmesser der konfokalen Blende entspricht) und der optischen Schnittdicke gegeben wäre. Es wird stattdessen zuerst aus den Daten des Flächendetektors zu den mehreren Scanpositionen eine dreidimensionale Rekonstruktion durchgeführt. Die Daten stammen wegen des reinen 2D-Scans aus der festen z-Lage der Fokalebene. Die dreidimensionale Rekonstruktion ist bekannt, wurde bislang jedoch nur bei Punktbildverwaschungsfunktionen eingesetzt, die gezielt durch ein Manipulationselement im Abbildungs- und/oder Beleuchtungsstrahlengang im bestimmten Maße asymmetrisch gemacht wurden, um die erwähnten Uneindeutigkeiten zu vermeiden. Ein solches Element wird nicht verwendet. Die 3D-Rekonstruktion liefert deshalb nur ein vorläufiges, tiefenaufgelöstes 3D-Bild, da eine einzige Fokalebenenposition ohne Manipulation verwendet wurde. Die Uneindeutigkeitsproblematik besteht, da sowohl die Beleuchtungs-Punktbildverwaschungsfunktion als auch die Abbildungs-Punktbildverwaschungsfunktion nicht gezielt manipuliert wurden und somit im Wesentlichen symmetrisch zur optischen Achse sind (unvermeidbare Rest-Asymmetrien können sich durch unperfekte Bauteile dennoch ergeben - entscheidend ist, dass keine gezielte PSF-Manipulation erfolgt). Diese Uneindeutigkeit wird bewusst hingenommen. Anschließend wird eine reduzierte Schnittdicke festgelegt oder sie war bereits vorbestimmt. Sie ist geringer als die Schnittdicke, die sich aus der optischen Abbildung ergibt. Aus dem vorläufigen tiefenaufgelösten 3D-Bild werden nur diejenigen Anteile selektiert, die innerhalb der reduzierten Schnittdicke um die feste z-Lage der Fokalebene liegen. Anteile, die außerhalb der reduzierten Schnittdicke liegen, werden verworfen. Es handelt sich dabei um die Anteile, die der erwähnten Uneindeutigkeitsproblematik unterliegen.

Da die Punktbildverwaschungsfunktion nicht modifiziert wird, ist sie im Wesentlichen symmetrisch. Diese Symmetrie ist in der Regel eine Symmetrie zur Fokalebene. In der Regel ist die Punktbildverwaschungsfunktion auch symmetrisch zur optischen Achse, insbesondere ist sie rotationssymmetrisch. Bei den meisten Mikroskopen entspricht die Punktbildverwaschungsfunktion einer Sanduhr-artigen Form, wobei die Taille in der Fokalebene liegt. Etwaige verbleibende Unsymmetrien, die sich durch die reale Verwirklichung der abbildenden Elemente ergibt, führen nicht zu einer derartigen Modifikation, dass die dreidimensionale Rekonstruktion aus einem einzigen Bild ein tiefenaufgelöstes Bild ohne Eindeutigkeiten ergäbe. Es werden zur 3D-Rekonstruktion aus den Bilddaten, die für eine feste Lage der Fokalebene und mit der unmodifizierten Punktbildverwaschungsfunktion erhalten wurden, bekannte Rekonstruktionsalgorithmen verwendet. Sie wurde zur Erzeugung eines tiefenaufgelösten 3D-Bildes für Mikroskope mit gezielter Manipulation der Punktbildverwaschungsfunktion entwickelt. Damit wird ein 3D-Bild erhalten, das tiefenaufgelöst ist, jedoch aufgrund der Uneindeutigkeiten dieses Bild kein vollwertiges und artefaktfreies 3D-Bild ist. Es wird deshalb hier als vorläufiges tiefenaufgelöstes 3D-Bild bezeichnet, um es von tiefenaufgelösten 3D-Bildern zu unterscheiden, die man bei gezielter und umfangreicher Manipulation der Punktbildverwaschungsfunktion mit denselben Rekonstruktionsalgorithmen erhalten würden und die artefaktfrei wären.

Der Strahlengang der Abbildung und Beleuchtung ist frei von Elemente, die eine Punktbildverwaschungsfunktion manipulieren und einen gezielten, bestimmbaren Grad der Asymmetrie einführen, welcher für die tiefenaufgelösten Ansätze, wie sie beispielsweise in der Publikation von Jesacher et al. erläutert sind, notwendig und verwendet sind. Insbesondere finden sich im Strahlengang keine astigmatischen Linsen oder Phasenmasken, welche die Punktbildverwaschungsfunktion asymmetrisch und tiefenabhängig auf bestimmte Weise gezielt modulieren.

Die dreidimensionale Rekonstruktion erzeugt in einer Ausführungsform 3D-Bilder in mehreren diskreten Schnittebenen. Es ist deshalb in einer Weiterbildung bevorzugt, das vorläufige, tiefenaufgelöste 3D-Bild so zu erzeugen, dass es mehrere diskrete Schnittebenen enthält. Als selektierter Anteil wird dann diejenige Schnittebene ausgewählt, die der festen z-Lage der Fokalebene entspricht.

Mit der Beleuchtungsstrahlung kann die Abgabe von Fluoreszenzstrahlung angeregt werden, was das Signal/Rausch-Verhältnis verbessert und den Algorithmus insgesamt stärkt, insbesondere kann die reduzierte Schnittdicke dann sehr dünn sein.

Das analog zum Verfahren vorgesehen Mikroskop hat eine Auswerteeinrichtung, welche die Verfahrensschritte durchführt und dazu geeignet ausgebildet ist. Analog zum Verfahren ist ein entsprechendes Mikroskop vorgesehen, das einen Beleuchtungsstrahlengang zur Beleuchtung der Probe mit den genannten Eigenschaften und einen Abbildungsstrahlengang zur beugungsbegrenzten Abbildung des Punkts in ein Beugungsbild auf den Flächendetektor mit seinen Pixeln umfasst. Wie bereits erwähnt, erhält der Beleuchtungsstrahlengang und der Abbildungsstrahlengang kein Manipulationselement, um die Punktbildverwaschungsfunktion asymmetrisch zu machen; insbesondere sind keine astigmatischen Linsen oder Phasenmasken vorgesehen. Der Begriff der Manipulation stellt dabei auf eine gezielte Beeinflussung der Punktbildverwaschungsfunktion ab, mit der eine Asymmetrie erzeugt wird, welche insbesondere bei der 3D-Rekonstruktion eine Uneindeutigkeit zwischen Schichten, die unterhalb der Fokalebene liegen, und Schichten, die oberhalb der Fokalebene liegen, vermeidet. Eine Manipulation ist also gleichbedeutend damit, dass Schichten unterhalb der Fokalebene eine eindeutig andere Punktbildverwaschungsfunktion haben, als Schichten, die oberhalb der Fokalebene liegen. Eine solche Manipulation erfordert üblicherweise den Einsatz von Phasenmasken und/oder astigmatischen Elementen im Strahlengang.

Soweit nachfolgend Aspekte des Verfahrens zur Mikroskopie erläutert werden, betreffen diese Aspekte gleichermaßen die Auswerteeinrichtung, die geeignet ausgebildet ist, die entsprechenden Verfahrensschritte auszuführen. Es kann sich dabei um einen Computer handeln, der mit entsprechender Software oder mit entsprechendem Programmcode ausgestaltet ist. Umgekehrt betreffen Aspekte, die anhand des Mikroskops und dessen Arbeitsweise geschildert werden, gleichermaßen das Verfahren zur Mikroskopie.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:

Fig. 1             eine Schemadarstellung eines Mikroskops zur hochauflösenden Mikroskopie,

Fig. 2, 2a und 2b  Schemadarstellungen der Anordnungen von Pixeln eines Detektors des Mikroskops der Fig. 1,

Fig. 3             einen Signallaufplan zum Mikroskopieverfahren, und

Fig. 4             ein Ausführungsbeispiel für die Datenverarbeitung eines hochauflösenden Konfokalmikroskops.

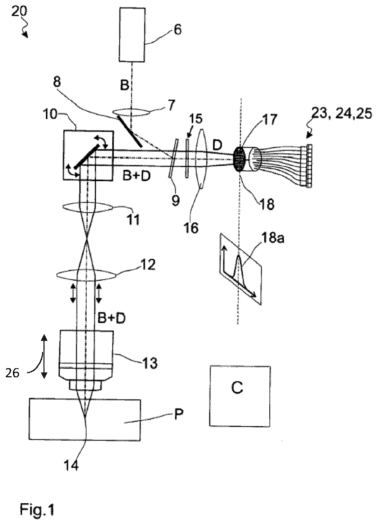

Fig. 1 zeigt schematisch ein Konfokalmikroskop 20 mit hoher, d. h. über die Beugungsgrenze gesteigerter Auflösung nach dem Prinzip des sog. Airy-Scans, wie es z. B. aus der EP 2317362 A1 bekannt ist. Es besitzt eine Lichtquelle 6 zur Beleuchtung der Probe P mit einem Beleuchtungsfleck 14. Das Beleuchtungslicht B wird über eine Strahlformung 7, einen Spiegel 8 zu einem Strahlteiler 9 geleitet. Der Strahlteiler 9 ist so ausgebildet, dass er möglichst viel des Beleuchtungslichts B reflektiert und zu einem Scanner 10 weiterleitet. Vom Scanner 10 wird das Beleuchtungslicht B über weitere Strahlformungsoptiken 11 und 12 zu einem Objektiv 13 geleitet. Das Objektiv 13 bündelt das Beleuchtungslicht B auf die Probe P in einen Beleuchtungsfleck 14.

Das von der Probe im Beleuchtungsfleck B erzeugte Probenlicht D wird vom Objektiv 13 gesammelt und über umgekehrten Weg wie das Beleuchtungslicht B zum Strahlteiler 9 geleitet. Der Strahlteiler 9 ist so gestaltet, dass er einen möglichst großen Anteil des Probenlichts D transmittiert. Das so vom Strahlteiler 9 transmittierte Probenlicht D wird über einen weiteren Filter 15 und eine weitere Strahlformungsoptik 16 zum Detektor 17 geleitet. Der Detektor 17 detektiert das Probenlicht D, erzeugt daraus elektrische Signale und leitet diese über Leiter 23, 24, 25 an eine Steuer- und Auswerteeinrichtung C, z. B. einen Computer, weiter. Auf diese Weise wird ein Beugungsbild 18 aufgenommen, das, wie die Beugungsstruktur 18a zeigt, beugungsbegrenzt ist.

Um ein Bild von der Probe P zu erhalten, wird der Beleuchtungsfleck 14 mit dem Scanner 10 punktweise über die Probe P bewegt. Aus den so gewonnenen punktweisen Probensignalen wird von der Steuer- und Auswerteeinrichtung C ein 3D-Bild zusammengesetzt, welches z. B. mittels eines Monitors dargestellt werden kann.

Der Scanner 10 erlaubt es dabei, ein zweidimensionales Bild aufzunehmen, welches sich lateral, also in einer Ebene senkrecht zur optischen Achse des Objektivs erstreckt.

Wie bereits erwähnt, erhält der Beleuchtungsstrahlengang und der Abbildungsstrahlengang kein Manipulationselement, um die Punktbildverwaschungsfunktion gezielt asymmetrisch zu machen; insbesondere sind keine astigmatischen Linsen oder Phasenmasken vorgesehen. Der Begriff der Manipulation stellt dabei auf eine gezielte Beeinflussung der Punktbildverwaschungsfunktion ab, mit der eine Asymmetrie erzeugt wird, welche insbesondere bei der 3D-Rekonstruktion eine Uneindeutigkeit zwischen Schichten, die unterhalb der Fokalebene liegen, und Schichten, die oberhalb der Fokalebene liegen, vermeidet. Eine gezielte Manipulation ist also gleichbedeutend damit, dass Schichten unterhalb der Fokalebene eine eindeutig andere Punktbildverwaschungsfunktion haben, als Schichten, die oberhalb der Fokalebene liegen. Eine solche Manipulation erfordert üblicherweise den Einsatz von Phasenmasken und/oder astigmatischen Elementen im Strahlengang.

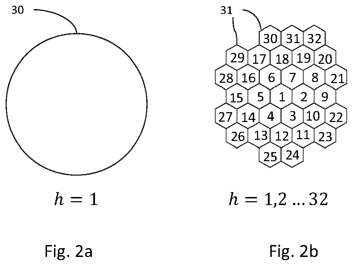

In Fig. 2a und 2b sind Detektoren eines konfokalen Mikroskops schematisch dargestellt. Fig. 2a zeigt einen herkömmlichen Detektor mit einer einzigen sensitiven Fläche 30. Um die hohe Auflösung zu erreichen, besitzt der Detektor 17 des Konfokalmikroskops 20 mehrere Detektionselemente oder Pixel 31 wie in Fig. 2b. Die Elemente sind durchnummeriert, die Anordnung besitzt exemplarisch 32 Pixel.

Die Größe der Pixel 31 ist so gewählt, dass sie wesentlich kleiner als das auf dem Detektor 17 erzeugte Beugungsbild 18 sind. Gleichzeitig ist die Anzahl der Pixel 31 und damit die gesamte Fläche des Detektors 17 so gewählt, dass ein wesentlicher Anteil des Probenlichts D für das Beugungsbild 18 detektiert werden kann.

Zum Vergleich ist in Fig. 2a ein Detektor mit nur einem Element 30 angedeutet, wie er für ein Konfokalmikroskop mit gewöhnlicher Auflösung verwendet würde. Dabei ist der Begriff gewöhnliche Auflösung so zu verstehen, dass die erreichte Auflösung maximal dem Abbe-Limit entspricht. Beim Konfokalmikroskop 20 mit erhöhter Auflösung hingegen wirken die Beleuchtung und die Detektion so zusammen, dass theoretisch eine doppelt so hohe Auflösung erreicht werden kann. In der Praxis ist die Auflösungssteigerung etwas geringer, weil Strukturen nahe der Auflösungsgrenze nur noch sehr kontrastarm übertragen werden können. Es lassen sich real Auflösungen bis zum 1,7-fachen des Abbe-Limits erreichen.

Der Detektor 17 des Konfokalmikroskops 20 mit hoher Auflösung erfasst für jeden abgetasteten Punkt $P(\vec{r}, z)$ viele detektierte Signale $D_h(\vec{r}, z)$ entsprechend der Anzahl der Detektorelemente 31. $\vec{r}$ bezeichnet die laterale Probenposition, z die axiale Probenposition, der Index $h$ bezeichnet das Detektorelement (Pixel). In der weiteren Beschreibung wird von 32 Pixeln ausgegangen; es kann jedoch auch eine andere Anzahl an Pixeln verwendet werden.

Jedes der Detektorelemente 31 erfasst ein Rohbildsignal von der Probe P bestehend aus den Signalen $D_h(\vec{r}, z)$. Die Rohbildsignale unterscheiden sich voneinander, wobei die Unterschiede durch den lateralen Abstand des Beleuchtungslichtflecks relativ zum vom jeweiligen Detektorelement detektierten Probenbereich bestimmt sind. Die Rohbildsignale werden mathematisch durch eine Faltung des "wirklichen" Probenbildes $O(\vec{r}, z)$ mit der Punktbildübertragungsfunktion (engl. Point spread function, PSF) $I_h(\vec{r}, z)$ des jeweiligen Detektorelementes $h$ beschrieben:

$$D_h(\vec{r}, z) = I_h(\vec{r}, z) * O(\vec{r}, z)$$

Die Funktion der Auswerteeinheit C ist es, aus allen $D_h(\vec{r}, z)$ ein Bild $\tilde{O}(\vec{r}, z)$ zu rekonstruieren, das möglichst genau dem Original der Probe $O(\vec{r}, z)$ entspricht. Dazu wird eine Entfaltung (engl. Deconvolution, DCV) und anschließende Zusammensetzung der so entfalteten Rohbildsignale verwendet, wobei die Prozesse Entfaltung und Zusammensetzung prozesstechnisch ineinander übergehen können.

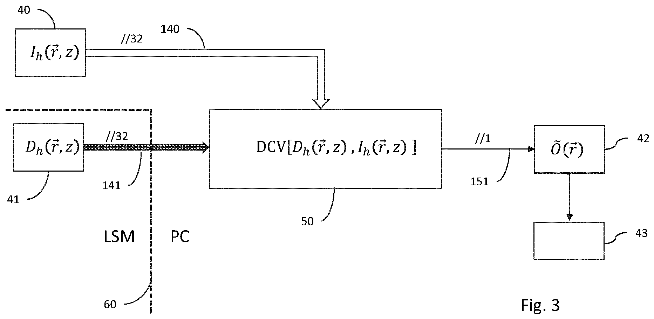

In Fig. 3 sind alle Schritte in einem Signallaufplan dargestellt. Ausgangspunkt sind die PSFs $I_h(\vec{r}, z)$ 40 sowie die Rohbildsignale $D_h(\vec{r}, z)$ 41. Die PSFs sind aufgrund der Eigenschaften des optischen Systems bekannt. Sie können aus Systemparametern berechnet oder einmalig gemessen und hinterlegt werden. Die Signale werden über Leitungen 140, 141 zur Auswertung 50 weitergeleitet, die alle Rohbildsignale entsprechend entfaltet, zusammensetzt und ein Bild

der Probe $\tilde{O}(\vec{r},z)$ 42 ausgibt, welches möglichst genau dem Original der Probe $O(\vec{r},z)$ entspricht.

In Fig. 3 und allen weiteren Signallaufplänen ist die Menge der zu übertragenden Daten durch die Dicke der Pfeile 140, 141, 151 dargestellt. So gibt es 32 Rohbildsignale $D_h(\vec{r},z)$, sowie auch 32 PSFs $I_h(\vec{r},z)$. Aus der Auswertung entsteht ein Bild der Probe $\tilde{O}(\vec{r},z)$, die Datenmenge dieses Bildes ist 32mal geringer als die aller Rohbildsignale. Das ist durch den dünnen Pfeil 151 symbolisiert. Ebenso ist der Faktor der Datenmengen bezogen auf ein einzelnes Bild an den Pfeilen angegeben. Also //32 für die Rohbildsignale und PSFs, //1 für das Bild der Probe.

Mit der gestrichelten Linie 60 sind Bereiche des gesamten konfokalen Mikroskops 20 voneinander abgegrenzt, zwischen denen die Daten der Rohbildsignale übertragen werden müssen. Dabei umfasst der Bereich LSM (Laser Scanning Microscope) hardwarenahe Bereiche des Konfokalmikroskops, also Optik, Mechanik und Elektronik, welche eine Datenübertragung zum Bereich PC ermöglicht. Der Bereich PC beschreibt die Steuer- und Auswerteeinrichtung C und damit alles, was zur Steuerung des Konfokalmikroskops 20, der weiteren Verarbeitung und Darstellung der Daten erforderlich ist. Kernstück dieses Bereichs ist üblicherweise ein Personal Computer C. Konkret müssen die Daten aller Rohbildsignale vom LSM zum PC übertragen werden. Dazu ist eine leistungsfähige Schnittstelle erforderlich, bzw. die Geschwindigkeit der Datenübertragung kann durch eine vorgegebene Schnittstelle limitiert sein.

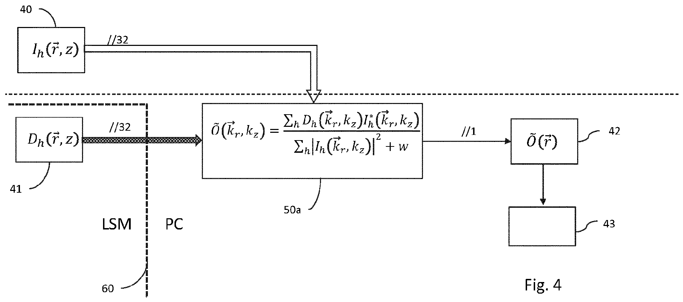

In Fig. 4 ist eine konkretere Ausführung der Datenverarbeitung eines Konfokalmikroskops 20 mit hoher Auflösung dargestellt. Die Auswerteeinheit 50a führt dabei z. B. eine sog. Wiener-Filterung aus. Dazu werden zunächst die in Raumkoordinaten dargestellten Rohbildsignale $D_h(\vec{r},z)$ fouriertransformiert, so dass die Rohbildsignale nun in Raumfrequenzkoordinaten $D_h(\vec{k}r,\,k_z)$ vorliegen. Mit den PSFs wird ebenso verfahren. Die in den Fourierraum transformierten PSFs $I_h(\vec{k},k_z)$ werden als Objekt-Transfer-Funktion OTF bezeichnet.

Für das Verständnis der Entfaltungsformel in 50a sind zwei Punkte wichtig:

1. Die Rohbildsignale entsprechen der Probe gefaltet mit der System-PSF; wie oben bereits dargestellt:

2. Eine Faltung im Ortsraum entspricht einer Multiplikation im Fourierraum. D. h. im Fourierraum lassen sich die Rohbildsignale als Produkt aus Probe und OTF darstellen:

$$D_h\big(\vec{k}_r, k_z\big) = I_h(\vec{k}_r, k_z) \cdot O(\vec{k}_r, k_z)$$

Setzt man die Formel für $D_h(\vec{k}_r, k_z)$ in die Entfaltungsformel ein so erhält man:

$$\tilde{O}\big(\vec{k}_r, k_z\big) = \frac{\sum_h I_h(\vec{k}_r, k_z) \cdot O(\vec{k}_r, k_z) \cdot I_h^*(\vec{k}_r, k_z)}{\sum_h \big|I_h(\vec{k}_r, k_z)\big|^2 + w} = O(\vec{k}_r, k_z) \cdot \frac{\sum_h \big|I_h(\vec{k}_r, k_z)\big|^2}{\sum_h \big|I_h(\vec{k}_r, k_z)\big|^2 + w}$$

$I_h^*\big(\vec{k}_r, k_z\big)$ bezeichnet die OTF mit konjugiert-komplexer Phase, das Produkt mit der (originalen) OTF ergibt dann deren Betragsquadrat.

w ist eine reelle positive Zahl und sei hier als Wiener-Parameter bezeichnet. Ist der Wiener-Parameter klein gegenüber $\sum_h|I_h(\vec{k_r,k_z})|^2$, so wird der Bruch nahezu 1 und $\tilde{O}(\vec{k}_r,k_z)$ entspricht nahezu dem Original der Probe $O(\vec{k}_r,k_z)$. Ein nicht zu geringes w stellt andererseits sicher, dass der Bruch an Stellen $(\vec{k}_r,k_z)$, an denen $\sum_h|I_h(\vec{k}_r,k_z)|^2$klein ist, nicht divergiert. Solche Divergenzen würden das in den Rohbildsignalen $D_h(\vec{k}_r,k_z)$ unweigerlich und hier nicht dargestellte Rauschen über alle Maßen verstärken und das Ergebnisbild $\tilde{O}(\vec{k}_r,k_z)$ unbrauchbar machen.

Um das Bild darstellen zu können, muss das in Raumfrequenzkoordinaten vorliegende Bild $\tilde{O}(\vec{k}_r,k_z)$ mit der inversen Fouriertransformation in den Ortsraum zurück transformiert werden.

Das detektierte Signal, $D(\vec{r},\vec{p})$, kann als Produkt der Anregungs-PSF, $E(\vec{r})$, und des Objekts, $O(\vec{r})$, gefaltet mit der Detektions-PSF, $H(\vec{r})$ modelliert werden:

$$D(\vec{r},\vec{p}) = \int_{\vec{r}} O(\vec{p} - \vec{r}\,')E(\vec{r}\,')H(\vec{r}\,' + \vec{r})d\vec{r}$$

$$(1)$$

wobei $\vec{p} = (p_x, p_y, p_z)$ die Position der Anregungs-PSF und $\vec{r} = (x, y, z)$ die Position der Detektions-PSF (Kamera Pixel oder Faserelement) ist.

Aus (1) in 2D Fall ($p_z = 0$, $z = 0$) ergibt sich als dreidimensionale Gleichung:

$$D(x,y,p_x,p_y) = \iiint_{x\,y\,z} O(p_x - x', p_y - y', z') E(x',y',z') H(x + x', y + y', z') dx' dy' dz'$$

$$(2)$$

Die Fourier-Transformation von (2) in $p_x$ und $p_y$ ergibt

$$D(x,y,\omega_{p_x},\omega_{p_y}) = \int_z O(\omega_{p_x},\omega_{p_y},z') FT_{x',y'}\{E(x',y',z') H(x + x', y + y', z')\} dz'$$

$$(3)$$

Substitution von $FT_{x',y'}\{E(x',y',z')H(x+x',y+y',z')\}$ durch $EH(x,y,\omega_{p_x},\omega_{p_y},z')$ in (3) ergibt

$$D(x,y,\omega_{p_x},\omega_{p_y}) = \int_z O(\omega_{p_x},\omega_{p_y},z') EH(x,y,\omega_{p_x},\omega_{p_y},z') dz'$$

$$(4)$$

Zur Vereinfachung der Notation wird angenommen, dass x und y der Position des Pixels *i* entspricht:

$$D_i(\omega_{p_x},\omega_{p_y}) = \int_z O(\omega_{p_x},\omega_{p_y},z') EH_i(\omega_{p_x},\omega_{p_y},z') dz'$$

$$(5)$$

Diskretisieren des Integrals über z in (5) führt zu

$$D_i(\omega_{p_x},\omega_{p_y}) = \sum_{k=1}^{n} O(\omega_{p_x},\omega_{p_y},z'_k) EH_i(\omega_{p_x},\omega_{p_y},z'_k)$$

$$(6)$$

Gleichung (6) transformiert die z-Dimension im Objektraum in die x-y-Dimension in den gemessenen Daten. Die Transformation ist vollständig definiert durch die "confocal" OTF, $EH_i(\vec{\omega_{p_x}},\vec{\omega_{p_y}},z'_k)$. Die z-Dimension im Objektraum kann beispielsweise durch lineare Regression im Fourier-Raum rekonstruiert werden.

Da wegen der unmanipulierten, insbesondere symmetrischen Punktbildverwaschungsfunktion eine eindeutige Lösung nach dieser dreidimensionalen Rekonstruktion nur für die Fokalebene vorliegt, kann diese unproblematisch ausgewählt werden. Die außerfokalen Ebenen werden verworfen, d. h. Ebenen, die außerhalb der vorbestimmten Schnittdicke und insbesondere oberhalb und unterhalb der Fokusebene liegen. Sie wären ohnehin nicht eindeutig zuzuordnen. Dies ist jedoch unproblematisch, da die vorliegende Mikroskopie ein 2D-Bild erzeugt. Es wird deshalb nach einer linearen Regressionsanalyse im Fourierraum das zentrale Bild des erhaltenen z-Stapels ausgewählt. Dies entspricht folgender Gleichung:

$$O^{\text{focal}}(\omega_{p_x},\omega_{p_y}) = O(\omega_{p_x},\omega_{p_y},z'_k)\Big|_{z'_k=0}$$

$$(7)$$

**EP 3 447 559 B1**

**Patentansprüche**

1. Verfahren zur hochauflösenden 2D-Scanning-Mikroskopie einer Probe (P), wobei

   - die Probe (P) mit Beleuchtungsstrahlung derart beleuchtet wird, dass die Beleuchtungsstrahlung (B) an einem Punkt in oder auf der Probe (P) zu einem beugungsbegrenzten Beleuchtungsfleck (14) gebündelt wird, wobei
   - der Punkt beugungsbegrenzt in ein Beugungsbild (18) auf einen ortsauflösenden Flächendetektor (17) abgebildet wird und der Flächendetektor (17) eine Ortsauflösung aufweist, die eine Beugungsstruktur (18a) des Beugungsbildes (18) auflöst,
   - wobei weder eine Abbildungs-Punktbildverwaschungsfunktion noch eine Beleuchtungs-Punktbildverwaschungsfunktion zum Erzeugen einer Asymmetrie manipuliert wird,
   - der Punkt relativ zur Probe (P) in verschiedene Scanpositionen mit einer Schrittweite verschoben wird, die kleiner ist als der halbe Durchmesser des Beleuchtungsflecks (14), wobei mehrere Scanpositionen bei einer festen z-Lage einer Fokalebene der Abbildung abgefahren werden,
   - der Flächendetektor (17) ausgelesen und aus den Daten des Flächendetektors (17) und aus den diesen Daten zugeordneten Scanpositionen ein 2D-Bild der Probe (P) erzeugt wird, das eine Auflösung aufweist, die über eine Auflösungsgrenze der Abbildung gesteigert ist,

   **dadurch gekennzeichnet, dass**

   - mit den Daten des Flächendetektors (17) zu den mehreren Scanpositionen bei der festen z-Lage der Fokalebene eine dreidimensionale Rekonstruktion durchgeführt wird, die ein vorläufiges tiefenaufgelöstes 3D-Bild liefert,
   - eine reduzierte Schnittdicke festgelegt wird oder vorbestimmt ist, die geringer ist als eine Schnittdicke, die sich durch das Abbilden ergibt,
   - im vorläufigen tiefenaufgelösten 3D-Bild nur Anteile selektiert werden, die innerhalb der reduzierten Schnittdicke um die feste z-Lage der Fokalebene liegen, und Anteile, die außerhalb der reduzierten Schnittdicke um die feste z-Lage der Fokalebene liegen, verworfen werden, um das 2D-Bild zu erzeugen.

2. Verfahren nach Anspruch 1, **dadurch gekennzeichnet, dass** in der dreidimensionalen Entfaltung das vorläufige, tiefenaufgelöste 3D-Bild so erzeugt wird, dass es mehrere diskrete Schnittebenen enthält, und dass als selektierter Anteil die der festen z-Lage der Fokalebene zugeordnete oder nächstliegende Schnittebene verwendet wird.

3. Verfahren nach Anspruch 1 oder 2, **dadurch gekennzeichnet, dass** die Abbildungs-Punktbildverwaschungsfunktion und die Beleuchtungs-Punktbildverwaschungsfunktion symmetrisch zur optischen Achse sind.

4. Verfahren nach Anspruch 1, 2 oder 3, **dadurch gekennzeichnet, dass** mit der Beleuchtungsstrahlung (B) die Probe (P) zur Abgabe von Fluoreszenzstrahlung angeregt wird.

5. Mikroskop zur hochauflösenden 2D-Scanning-Mikroskopie einer Probe (P), das aufweist

   - einen Beleuchtungsstrahlengang zur Beleuchtung der Probe (P) mit Beleuchtungsstrahlung (B), wobei die Beleuchtungsstrahlung an einem Punkt in oder auf der Probe (P) zu einem beugungsbegrenzten Beleuchtungsfleck (14) gebündelt ist, wobei der Beleuchtungsstrahlengang frei von Elementen zur Manipulation einer Beleuchtungs-Punktbildverwaschungsfunktion ist,
   - einen Abbildungsstrahlengang zur beugungsbegrenzen Abbildung des Punkts in ein Beugungsbild (18) auf einen ortsauflösenden Flächendetektor (17), wobei der Abbildungsstrahlengang frei von Elementen zur Manipulation einer Abbildungs-Punktbildverwaschungsfunktion ist und der Flächendetektor (17) eine Ortsauflösung aufweist, die eine Beugungsstruktur (18a) des Beugungsbildes (18) auflöst,
   - eine Scaneinrichtung (10) zum Verschieben des Punkts relativ zur Probe (P) in verschiedene Scanpositionen mit einer Schrittweite, die kleiner ist als der halbe Durchmesser des Beleuchtungsflecks (14), wobei die Scaneinrichtung mehrere Scanpositionen bei einer festen z-Lage einer Fokalebene der Abbildung abfährt,
   - eine Auswerteeinrichtung (C) zum Erzeugen eines 2D-Bildes der Probe (P) aus den Daten des Flächendetektors (17) und aus den diesen Daten zugeordneten Scanpositionen, das eine Auflösung aufweist, die über eine Auflösungsgrenze des Abbildungsstrahlengangs gesteigert ist,

   **dadurch gekennzeichnet, dass**

- die Auswerteeinrichtung (C) mit den Daten des Flächendetektors (17) zu den mehreren Scanpositionen bei der festen z-Lage der Fokalebene eine dreidimensionale Entfaltung durchführt und ein vorläufiges tiefenaufgelöstes 3D-Bild erzeugt,

- die Auswerteeinrichtung (C) eine reduzierte Schnittdicke eine reduzierte Schnittdicke festlegt oder der Auswerteeinrichtung eine reduzierte Schnittdicke vorbestimmt ist, die geringer ist als eine Schnittdicke, die sich durch das Abbilden ergibt,

- die Auswerteeinrichtung (C) im vorläufigen tiefenaufgelösten 3D-Bild nur Anteile selektiert, die innerhalb der reduzierten Schnittdicke um die feste z-Lage der Fokalebene liegen, und Anteile, die außerhalb der reduzierten Schnittdicke um die feste z-Lage der Fokalebene liegen, verwirft, um das 2D-Bild zu erzeugen.

6. Mikroskop nach Anspruch 5, **dadurch gekennzeichnet, dass** die Auswerteeinrichtung (C) in der dreidimensionalen Entfaltung das vorläufige tiefenaufgelöste 3D-Bild so erzeugt, dass es mehrere diskrete Schnittebenen enthält, und als selektierten Anteil die der festen z-Lage der Fokalebene zugeordnete oder nächstliegende Schnittebene verwendet.

7. Mikroskop nach Anspruch 5 oder 6, **dadurch gekennzeichnet, dass** die Abbildungs-Punktbildverwaschungsfunktion und die Beleuchtungs-Punktbildverwaschungsfunktion symmetrisch zur optischen Achse sind.

8. Mikroskop nach Anspruch 5, 6 oder 7, **dadurch gekennzeichnet, dass** der Beleuchtungsstrahlengang die Probe (P) zur Abgabe von Fluoreszenzstrahlung anregt.

**Claims**

1. Method for high-resolution 2D scanning microscopy of a sample (P), wherein

- the sample (P) is illuminated with illumination radiation in such a way that the illumination radiation (B) is focused at a point in or on the sample (P) to form a diffraction-limited illumination spot (14), wherein
- the point is imaged in a diffraction-limited manner into a diffraction image (18) on a spatially resolving surface detector (17), and the surface detector (17) has a spatial resolution that resolves a diffraction structure (18a) of the diffraction image (18),
- wherein manipulated is neither an imaging point spread function nor an illumination point spread function for producing an asymmetry,
- the point is displaced relative to the sample (P) into different scanning positions with an increment of less than half the diameter of the illumination spot (14), wherein a plurality of scanning positions are traveled with a fixed z-location of a focal plane of the imaging,
- the surface detector (17) is read, and a 2D image of the sample (P) is produced from the data of the surface detector (17) and from the scanning positions assigned to said data, said 2D image having a resolution that is increased beyond a resolution limit for imaging,

**characterized in that**

- the data of the surface detector (17) with respect to the plurality of scanning positions at the fixed z-location of the focal plane are used to perform a three-dimensional reconstruction which provides a provisional depth-resolved 3D image,
- a reduced section thickness is specified or predetermined, which is less than a section thickness which is produced by the imaging,
- in the provisional, depth-resolved 3D image, only portions which are situated in the reduced section thickness around the fixed z-location of the focal plane are selected, and portions which are outside the reduced section thickness around the fixed z-location of the focal plane are discarded to produce the 2D image.

2. Method according to Claim 1, **characterized in that** in the three-dimensional deconvolution the provisional, depth-resolved 3D image is produced such that it contains a plurality of discrete section planes, and **in that**, as a selected portion, the section plane which is assigned to, or closest to, the fixed z-location of the focal plane is used.

3. Method according to Claim 1 or 2, **characterized in that** the imaging point spread function and the illumination point spread function are symmetric with respect to the optical axis.

4. Method according to Claim 1, 2 or 3, **characterized in that** the sample (P) is excited with the illumination radiation (B) to emit fluorescence radiation.

5. Microscope for high-resolution 2D scanning microscopy of a sample (P), comprising

   - an illumination beam path for illuminating the sample (P) with illumination radiation (B), wherein the illumination radiation is focused at a point in or on the sample (P) to form a diffraction-limited illumination spot (14), wherein the illumination beam path is free from elements for manipulating an illumination point spread function,
   - an imaging beam path for the diffraction-limited imaging of the point into a diffraction image (18) on a spatially resolving surface detector (17), wherein the imaging beam path is free from elements for manipulating an imaging point spread function and the surface detector (17) has a spatial resolution that resolves a diffraction structure (18a) of the diffraction image (18),
   - a scanning device (10) for displacing the point relative to the sample (P) into different scanning positions with an increment of less than half the diameter of the illumination spot (14), wherein the scanning device travels a plurality of scanning positions with a fixed z-location of a focal plane of the image,
   - an evaluation device (C) for producing a 2D image of the sample (P) from the data of the surface detector (17) and from the scanning positions assigned to said data, said 2D image having a resolution that is increased beyond a resolution limit of the imaging beam path,

   **characterized in that**

   - the evaluation device (C) performs a three-dimensional deconvolution and produces a provisional depth-resolved 3D image with the data of the surface detector (17) with respect to the plurality of scanning positions at the fixed z-location of the focal plane,
   - the evaluation device (C) specifies a reduced section thickness a reduced section thickness, or a reduced section thickness is predetermined for the evaluation device, which is less than a section thickness which is produced by the imaging,
   - the evaluation device (C) selects in the provisional, depth-resolved 3D image only portions which are situated in the reduced section thickness around the fixed z-location of the focal plane, and discards portions which are outside the reduced section thickness around the fixed z-location of the focal plane to produce the 2D image.

6. Microscope according to Claim 5, **characterized in that** the evaluation device (C) produces the provisional, depth-resolved 3D image in the three-dimensional deconvolution such that it contains a plurality of discrete section planes, and uses, as a selected portion, the section plane which is assigned to, or closest to, the fixed z-location of the focal plane.

7. Microscope according to Claim 5 or 6, **characterized in that** the imaging point spread function and the illumination point spread function are symmetric with respect to the optical axis.

8. Microscope according to Claim 5, 6 or 7, **characterized in that** the illumination radiation beam excites the sample (P) to emit fluorescence radiation.

**Revendications**

1. Procédé pour la microscopie à balayage 2D haute résolution d'un échantillon (P), dans lequel

   - l'échantillon (P) est éclairé par un rayonnement d'éclairage de telle sorte que le rayonnement d'éclairage (B) soit focalisé sur un point dans ou sur l'échantillon (P) en un spot d'éclairage à diffraction limitée (14), dans lequel
   - le point est représenté à diffraction limitée sur une image de diffraction (18) sur un détecteur de surface à résolution spatiale (17), et le détecteur de surface (17) présente une résolution spatiale qui restitue une structure de diffraction (18a) de l'image de diffraction (18),
   - aucune fonction de flou d'image de point de représentation, ni fonction de flou d'image de point d'éclairage n'étant manipulées pour générer une asymétrie,
   - le point est décalé par rapport à l'échantillon (P) vers différentes positions de balayage avec un pas de progression inférieur à la moitié du diamètre du spot d'éclairage (14), plusieurs positions de balayage étant parcourues avec une position z fixe d'un plan focal de la représentation,
   - le détecteur de surface (17) est lu, et à partir des données du détecteur de surface (17) et des positions de balayage associées à ces données, une image 2D de l'échantillon (P) est générée, laquelle présente une résolution augmentée au-dessus d'une limite de résolution de la représentation,

**caractérisé en ce que**

- avec les données du détecteur de surface (17) concernant les plusieurs positions de balayage avec la position z fixe du plan focal, une reconstruction tridimensionnelle est réalisée, laquelle fournit une image 3D provisoire à résolution en profondeur,
- une épaisseur de coupe réduite est déterminée ou prédéterminée, laquelle est inférieure à une épaisseur de coupe résultant de la représentation,
- sur l'image 3D provisoire à résolution en profondeur, seules les fractions qui sont situées à l'intérieur de l'épaisseur de coupe réduite autour de la position z fixe du plan focal sont sélectionnées, et les fractions qui sont situées en dehors de l'épaisseur de coupe réduite autour de la position z fixe du plan focal sont rejetées pour générer l'image 2D.

2. Procédé selon la revendication 1, **caractérisé en ce que** lors du déploiement tridimensionnel, l'image 3D provisoire à résolution en profondeur est générée de façon à contenir plusieurs plans de coupe discrets, et à ce que le plan de coupe associé à, ou situé le plus près de, la position z fixe du plan focal soit utilisé comme la fraction sélectionnée.

3. Procédé selon la revendication 1 ou 2, **caractérisé en ce que** la fonction de flou d'image de point de représentation et la fonction de flou d'image de point d'éclairage sont symétriques par rapport à l'axe optique.

4. Procédé selon la revendication 1, 2 ou 3, **caractérisé en ce que** le rayonnement d'éclairage (B) excite l'échantillon (P) pour qu'il émette un rayonnement de fluorescence.

5. Microscope pour la microscopie à balayage 2D haute résolution d'un échantillon (P), comprenant

- un trajet optique d'éclairage pour éclairer l'échantillon (P) avec un rayonnement d'éclairage (B), le rayonnement d'éclairage étant focalisé sur un point dans ou sur l'échantillon (P) en un spot d'éclairage (14) à diffraction limitée, le trajet optique d'éclairage étant exempt d'éléments permettant de manipuler une fonction de flou d'image de point d'éclairage,
- un trajet optique de représentation pour la représentation à diffraction limitée du point sur une image de diffraction (18) sur un détecteur de surface à résolution spatiale (17), le trajet optique de représentation étant exempt d'éléments permettant de manipuler une fonction de flou d'image de point de représentation et le détecteur de surface (17) présentant une résolution spatiale qui restitue une structure de diffraction (18a) de l'image de diffraction (18),
- un dispositif de balayage (10) permettant de décaler le point par rapport à l'échantillon (P) vers différentes positions de balayage avec un pas de progression inférieur à la moitié du diamètre du spot d'éclairage (14), le dispositif de balayage parcourant plusieurs positions de balayage avec une position z fixe d'un plan focal de la représentation,
- un dispositif d'évaluation (C) permettant de générer à partir des données du détecteur de surface (17) et des positions de balayage associées à ces données une image 2D de l'échantillon (P) qui présente une résolution augmentée au-dessus d'une limite de résolution du trajet optique de représentation,

**caractérisé en ce que**

- le dispositif d'évaluation (C) effectue un déploiement tridimensionnel avec les données du détecteur de surface (17) concernant les plusieurs positions de balayage avec la position z fixe du plan focal et génère une image 3D provisoire à résolution en profondeur,
- le dispositif d'évaluation (C) détermine une épaisseur de coupe réduite une épaisseur de coupe réduite, ou une épaisseur de coupe réduite est prédéterminée pour le dispositif d'évaluation, laquelle est inférieure à une épaisseur de coupe résultant de la représentation,
- le dispositif d'évaluation (C) ne sélectionne sur l'image 3D provisoire à résolution en profondeur que des fractions situées à l'intérieur de l'épaisseur de coupe réduite autour de la position z fixe du plan focal, et rejette des fractions situées en dehors de l'épaisseur de coupe réduite autour de la position z fixe du plan focal afin de générer l'image 2D.

6. Microscope selon la revendication 5, **caractérisé en ce que** le dispositif d'évaluation (C) génère dans le déploiement tridimensionnel l'image 3D provisoire à résolution en profondeur de telle sorte qu'elle contienne plusieurs plans de coupe discrets et utilise comme fraction sélectionnée le plan de coupe associé à, ou situé le plus près de, la position z fixe du plan focal.

7. Microscope selon la revendication 5 ou 6, **caractérisé en ce que** la fonction de flou d'image de point de représentation et la fonction de flou d'image de point d'éclairage sont symétriques par rapport à l'axe optique.

8. Microscope selon la revendication 5, 6 ou 7, **caractérisé en ce que** le trajet optique d'éclairage excite l'échantillon (P) pour qu'il émette un rayonnement de fluorescence.

Fig. 1

$$h = 1$$

Fig. 2a

$$h = 1,2 \ldots 32$$

Fig. 2b

40

$I_h(\vec{r}, z)$

//32    140

$D_h(\vec{r}, z)$

//32

141

41

LSM    PC

60

$DCV[D_h(\vec{r}, z), I_h(\vec{r}, z)]$

50

//1

151

$\tilde{O}(\vec{r})$    42

43

Fig. 3

40

$$I_h(\vec{r}, z)$$

//32

41

$$D_h(\vec{r}, z)$$

//32

LSM | PC

60

$$\tilde{O}(\vec{k}_r, k_z) = \frac{\sum_h D_h(\vec{k}_r, k_z) I_h^*(\vec{k}_r, k_z)}{\sum_h \left| I_h(\vec{k}_r, k_z) \right|^2 + w}$$

50a

//1

$$\tilde{O}(\vec{r})$$

42

43

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2317362 A1
- US 3013467 A
- US 8705172 B
- DE 102010049627 A1
- US 20110267688 A

**In der Beschreibung aufgeführte Nicht-Patentliteratur**

- **C. MUELLER et al.** *Phys. Rev. Lett.,* 2010, vol. 104, 198101
- **A. YORK et al.** Resolution doubling in live, multi-cellular organisms via multifocal Structured Illumination Microscopy. *Nature Methods,* 2012, vol. 9
- **G. DE LUCA et al.** Re-scan confocal microscopy: scanning twice for better resolution. *Biomedical Optics Express,* vol. 4 (11), 2644-2656
- **S. ROTH.** *Optical photon reassignment microscopy (OPRA)*
- **A. YORK et al.** *Nat. Methods,* 2012, vol. 9, 749
- **I. GREGOR et al.** *Proc. SPIE,* 10071
- *Single Molecule Spectroscopy and Superresolution Imaging X,* 24. April 2017
- **A. JESACHER et al.** Three-dimensional information from two-dimensional scans: a scanning microscope with postacquisition refocusing capability. *Optica,* 2015, vol. 2, 210-213